(19) Europäisches Patentamt

European Patent Office

Office européen des brevets

(11) **EP 0 930 141 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.⁷: **B29B 7/48**, B01F 15/00, B01F 7/04

(21) Anmeldenummer: **99100053.0**

(22) Anmeldetag: **05.01.1999**

(54) **Mischvorrichtung**

Mixer

Mélangeur

(84) Benannte Vertragsstaaten:
**BE CH DE ES FR GB IT LI NL**

(30) Priorität: **14.01.1998 DE 19801073**

(43) Veröffentlichungstag der Anmeldung:
**21.07.1999 Patentblatt 1999/29**

(73) Patentinhaber: **BAYER AG**
**51368 Leverkusen (DE)**

(72) Erfinder: **Schuchardt, Heinrich**
**51373 Leverkusen (DE)**

(56) Entgegenhaltungen:
EP-A- 0 715 881          DE-A- 19 611 852
US-A- 4 392 967          US-A- 5 399 012

## Beschreibung

Die Erfindung betrifft eine Mischvorrichtung zur Behandlung von viskosen Substanzen, bestehend aus einem beheizbaren Behälter mit Produkteintritt auf der einen Seite des Behälters und Produktaustritt auf der anderen Seite des Behälters, gegebenenfalls einem Brüdenstutzen sowie zwei oder mehreren zueinander parallelen, gegensinnig rotierenden Wellen mit darauf befindlichen, sich in Umfangsrichtung erstreckenden Paddeln und entlang der axialen Richtung sich erstreckenden Schaufeln. Die Vorrichtung ermöglicht die aktive axiale Förderung des Mischgutes, wobei sich die bewegten Einbauten während des Betriebes der Vorrichtung kinematisch vollständig selbst reinigen.

Bei der Erzeugung und Verarbeitung von Kunststoffen und Kautschuk müssen hochviskose Flüssigkeiten, die gegebenenfalls feinteilige Feststoffe enthalten, verfahrenstechnisch behandelt werden. Insbesondere werden Vorrichtungen zum Mischen, Ausdampfen und Reagieren von Kunststoffen benötigt. Diese Mischer bzw. Reaktoren müssen eine gute Mischwirkung aufweisen, und z.B. im Falle einer Ausdampfung flüchtiger Komponenten infolge einer Freisetzung durch Reaktion, auch eine schnelle Erneuerung der freien Oberflächen des Mischers ermöglichen.

Zur verfahrenstechnischen Behandlung viskoser Produkte werden für Operationen wie Eindampfen und Reagieren Apparate benötigt, die sowohl über ein möglichst großes freies Volumen (definiert als das Verhältnis von Produktvolumen zum Gehäuseinnenvolumen) als auch über eine möglichst gute kinematische Selbstreinigung verfügen. Das freie Volumen der Vorrichtung ist dabei indirekt ein Maß für die Apparatekosten, da bei großem freien Volumen das Volumen der Rotoren im Vergleich zum vom Produkt einnehmbaren Volumen sinkt.

Für solche Verfahrensschritte, die durch den Stoffaustausch zwischen einer flüssigen Phase und der Gasphase bestimmt werden, ist das Produkt aus der Grenzfläche zwischen diesen beiden Phasen und dem Stoffübergangskoeffizienten geschwindigkeitsbestimmend.

Beim Stoffaustausch zwischen Gasphase und hochviskosen Flüssigkeiten wird der Stoffübergangskoeffizient im wesentlichen durch die Häufigkeit der Erneuerung der Flüssigkeitsoberfläche kontrolliert.

Eine gute kinematische Selbstreinigung ist zudem erforderlich um die Bildung von Ablagerungen zu vermeiden, in denen im Falle der Verwendung des Mischers als Reaktor unerwünschte Nebenreaktionen durch eine lange Verweilzeit begünstigt werden. Ebenso führt eine regelmäßige Erneuerung der Oberflächen zu einem guten Stoffaustauschverhalten bei Ausdampfprozessen, wie z.B. Polykondensationen.

Diese beiden Eigenschaften werden mit aus dem Stand der Technik bekannten Vorrichtungen, z.B. den in den Veröffentlichungen US 5,399,012, EP 0 715 881 A2 und DE 19611852 A1 Mischern bis zu einem gewissen Grad erreicht.

US 5,399,012 beschreibt eine Mischvorrichtung mit vollständiger kinematischer Selbstreinigung. Durch die produktausstreichende Bewegung der Abstreifer wird ein großes Maß an Oberflächenerneuerung erreicht. Das freie Volumen kann je nach Wahl der Geometrieparameter (Gehäusedurchmesser/Achsabstand, Anzahl der Abstreifer) auf über 70 % eingestellt werden.

Auch die Vorrichtung nach EP 0 715 881 A2 ist vollständig selbstreinigend. Da die Abstreifer aus US 5,399,012 jedoch durch Balken mit geringerer Oberfläche ersetzt sind, ist die bei jeder Umdrehung erneuerte Oberfläche kleiner.

DE 19 611 852 A1 besitzt dieselben Vorzüge wie US 5,399,012, weist jedoch eine zusätzliche Förderung in axialer Richtung auf.

Eine Anwendung für derartige Apparte wird zum Beispiel in der deutschen Offenlegungsschrift DE 19 612 139 A1 dargestellt.

Bei der Auswahl von Mischapparaten für die Durchführung kontinuierlicher Prozesse ist aber auch das Durchströmungsverhalten der Mischapparate sehr wichtig. Angestrebt werden insbesondere für die Durchführung von Polymerisationsreaktionen Apparate, die eine geringe axiale Rückvermischung des durchlaufenden Mischgutes aufweisen, da dann die äquivalente Rührkesselanzahl erhöht wird. Je nach gewünschter Verweilzeit ist eine aktive Förderung erforderlich.

Die Vorrichtungen nach dem US-Patent 5,399,012 und der Europäische Patentanmeldung EP 0 715 881 A2 besitzen keine Einrichtung zur axialen Förderung des Mischgutes, sondern sind auf die Schwerkraft als treibendes Potential für den axialen Transport angewiesen. Eine Verweilzeit unter 20 Minuten ist bei Produkten mit einer Viskosität über 10 Pas und einer äquivalenten Rührkesselanzahl von größer 5 nicht sinnvoll erreichbar.

Ein besonders gutes axiales Förderverhalten besitzen Extruder. Ihr Nachteil ist das geringe freie Volumen, sowie die im Vergleich zu gleichvolumigen Apparaten nach einem der oben genannten Vorrichtungen geringe Erneuerung ihrer inneren Oberflächen. Aus wirtschaftlichen Gründen können sie nur für Mischprozesse mit einer Verweilzeit kleiner 3 Minuten, vorzugsweise kleiner 1 Minute eingesetzt werden.

Mit der aus DE 19611852 A1 bekannten Vorrichtung gemäß dem einleitenden Teil des Anspruchs 1, wurde ein neuartiger Fördermechanismus gefunden: In eine Kammer gebildet aus zwei Abstreifern und einem Paddel, das auf einer Welle befestigt ist, fährt ein Abstreifer einer benachbarten Welle. Das Produkt wird vorzugsweise in die dem Paddel abgewandte Richtung verdrängt. Dieser Mischer weist zwei gravierende Schwachpunkte auf: Das in der Kammer befindliche Produkt weicht größtenteils durch die Spalte zwischen Wellen und Abstreifern aus, ohne axial gefördert zu werden. Außerdem sind zur Halterung von Abstreifern an den Wellenenden Halbscheiben erforderlich. Eine Betrachtung der Kinematik dieses Mischers führt zur Erkenntnis, daß ein axialer Austrag von Produkt nicht möglich ist, da sich in dem Bereich, in dem die axiale Förderung erfolgt immer eine der Halbscheiben in den Weg stellt.

Aufgabe der Erfindung ist es eine Vorrichtung zu schaffen, die vollständig kinematisch selbstreinigend ist, die durch ein gutes axiales Fördervermögen insbesondere für eine Verweilzeit kleiner 15 Minuten geeignet ist und die auf Grund einer großen bei jeder Umdrehung erneuerten Produktoberfläche besonders für Ausdampf- und Entgasungsprozesse bei viskosen Flüssigkeiten geeignet ist.

Diese Aufgabe wird erfindungsgemäß gelöst durch eine Mischvorrichtung zur Behandlung von viskosem Mischgut, bestehend aus einem Gehäuse mit einem Produkteinlaß und einem Produktauslaß, gegebenenfalls einem Brüdenstutzen, zwei oder mehreren Wellen mit darauf befindlichen, sich in Umfangsrichtung erstreckenden Paddeln und entlang der axialen Richtung sich erstreckenden Schaufeln und einem Antriebsmittel für die gegensinnige Rotation benachbarter Wellen, dadurch gekennzeichnet,

daß die Schaufeln jeweils sowohl mit einer der Wellen als auch mit einem Paddel verbunden sind, abgesehen von den Schaufeln, die sich in axialer Richtung gesehen an den Enden der Vorrichtung befinden,

daß sich auf der stromaufwärts befindlichen Seite eines jeden Paddels mindestens eine nach außen fördernde Schaufel und an der stromabwärts befindlichen Seite eines jeden Paddels mindestens eine nach innen fördernde Schaufel befindet, abgesehen von den Paddeln, die sich in axialer Richtung an den Enden der Vorrichtung befinden,

daß die Schaufeln und Paddel das Gehäuse bei der durch das Antriebsmittel hervorgerufenen Rotation der Wellen vollständig überstreichen und damit vollständig kinematisch reinigen,

daß die Schaufein und Paddel die Wellen bei der durch das Antriebsmittel hervorgedaß die Schaufeln und Paddel die Wellen bei der durch das Antriebsmittel hervorgerufenen Rotation der Wellen vollständig überstreichen und damit vollständig kinematisch reinigen,

daß die Schaufeln und Paddel einer Welle bei der durch das Antriebsmittel hervorgerufenen Rotation der Wellen durch Schaufeln und Paddel einer direkt benachbarten Welle, durch diese Welle selbst oder durch die Gehäuseinnenwand überstrichen und damit vollständig kinematisch gereinigt werden,

daß jeweils zwei in Umfangsrichtung einer Welle aufeinander folgende Schaufeln und mindestens ein Paddel (das mit einer der Schaufeln verbunden ist) eine Kammer bilden, in die sich eine auf einer anderen im Eingriff befindlichen benachbarten Welle befindliche Schaufel bei der Rotation der Wellen hinein bewegt und dabei das Produkt mehrheitlich in die der Oberfläche des Paddels entgegengesetzte Richtung aus der Kammer verdrängt.

Für die nachfolgende Beschreibung wird der Einfachheit halber die Gesamtheit aus Welle und mit der Welle verbundenen Schaufeln und Paddel als Rotor bezeichnet. Die Vorrichtung kann zwei, drei, vier oder mehr parallel zueinander angeordnete Rotoren aufweisen, wobei jeweils benachbarte Rotoren immer gegensinnig rotieren.

Ein wesentlicher Vorteil der neuen Mischvorrichtung ist ihre kinematische Selbstreinigung. Unter kinematischer Reinigung soll hier das Überstreichen von Flächen eines Vorrichtungsteils durch die Kanten oder Flächen eines anderen Vorrichtungsteils verstanden werden, wobei zur Vermeidung der Blockierung bewegter Teile ein unter Berücksichtigung der Fertigungstoleranz erreichbares Spiel der bewegten Teile erlaubt wird. Die Mischvorrichtung ist vollständig selbstreinigend.

Unter der stromaufwärts gerichteten Seite eines Paddels wird die Seite verstanden, deren Fläche in Richtung des Einlaßendes des Mischers zeigt. Die stromabwärts gerichtete Seite zeigt in Richtung des Auslaßendes des Mischers. Unter der Förderung der Schaufeln nach außen wird hier die Förderung radial von der Welle weg in Richtung der seitlichen Gehäusewand verstanden. Die Förderung nach innen bezeichnet die Förderrichtung radial zur Welle hin.

In einer bevorzugten Ausführung sind alle geometrischen Schnittkanten von Schaufeln und Paddeln in einem beliebigen geometrischen Radialschnitt durch einen Rotor entweder Epizykloidenabschnitte oder Kreisbögen um den Rotationsmittelpunkt.

Ein Epizykloid ist die Kurve, die ein Punkt

$$\begin{pmatrix} x_1 \\ y_1 \end{pmatrix}$$

im Koordinatensystems eines Rotors 1 mit Mittelpunkt

$$\begin{pmatrix} a \\ 0 \end{pmatrix}$$

im Koordinatensystem des anderen Rotors 2 mit dem Mittelpunkt

$$\begin{pmatrix} 0 \\ 0 \end{pmatrix}$$

beschreibt:

$$\begin{pmatrix} x_2 \\ y_2 \end{pmatrix} = \begin{pmatrix} \cos(\omega_2 t) & \sin(\omega_2 t) \\ -\sin(\omega_2 t) & \cos(\omega_2 t) \end{pmatrix} \cdot \left[ \begin{pmatrix} \cos(\omega_1 t) & -\sin(\omega_1 t) \\ \sin(\omega_1 t) & \cos(\omega_1 t) \end{pmatrix} \cdot \begin{pmatrix} x_1 \\ y_1 \end{pmatrix} + \begin{pmatrix} a \\ 0 \end{pmatrix} \right].$$

Dabei sind $\omega_1$ und $\omega_2$ die Winkelgeschwindigkeiten der Rotoren, und entgegengesetzte Vorzeichen der Winkelgeschwindigkeiten bezeichnen ein gegensinnig rotierendes System.

Um die Kontur einer spielbehafteten Ausführung der Erfindung zu erzeugen, kann zur geometrischen Konstruktion entlang des Epizykloidenabschnittes ein die Kontur erzeugender Kreis mit einem Radius gleich dem erwünschten Spiel bewegt werden. Die erzeugte spielbehaftete Kontur ist dann eine Kurve, die den Kreis während seiner genauen Bewegung tangential berührt. (vgl. US 4,556,324).

In einer weiteren bevorzugten Ausführung treibt das Antriebsmittel die Wellen betragsmäßig gleich schnell an.

In einer anderen bevorzugten Ausführung befindet sich in jedem beliebigen geometrischen Radialschnitt durch den Mischer auf jedem Rotor nur ein Paddel.

In einer anderen bevorzugten Ausführung beträgt das Verhältnis zwischen Gehäuseinnendurchmesser und Achsabstand von 1,45 bis 1,70.

Besonders zur Verwendung in Extrudern eignet sich eine bevorzugte Bauform des Mischers, in der auf Kernwellen Elemente aufgesteckt werden, die aus einer Wellenhülse, mit der Hülse verbundenen Paddeln und Schaufelabschnitten bestehen. Solche Elemente können wie konventionelle modulartige Komponenten bekannter Schneckenmaschinen beliebig kombiniert werden. So ist es möglich Scherer oder Schneckenförderer mit den genannten Elementen zu kombinieren.

Bevorzugt ist eine Vorrichtung, dadurch gekennzeichnet, daß die Wellen aus Kernwellen und auf diesen befindlichen Wellenhülsen zusammengesetzt sind, daß ausgewählte Schaufeln in wenigstens zwei in axialer Richtung aufeinander folgende Schaufelabschnitte geteilt sind, und daß die Wellenhülsen mit Paddeln, gegebenenfalls nicht geteilten Schaufeln und Schaufelabschnitten fest verbundene Segmente bilden.

Insbesondere zur Erzeugung eines hohen Austrittsdrucks eignet sich eine bevorzugte Bauform des erfindungsgemäßen Mischers, in der auf jeder Welle zusätzliche Extruderschneckenabschnitte angeordnet sind.

Für Ausdampf- und Entgasungsprozesse ist häufig die Entgasung in aufeinanderfolgend niedriger werdenden Druckstufen sinnvoll. Zur Trennung zwischen Druckstufen können ebenfalls Extruderschneckenabschnitte dienen. Besonders bevorzugt wird eine Ausführung, wo in Strömungsrichtung zuerst ein Extruderschneckenabschnitt mit größerer Steigung und dann ein Abschnitt mit kleinerer Steigung verwendet wird.

Der Abschnitt mit kleinerer Steigung erzeugt einen Rückstau, der eine Abdichtung der spielbedingten Spalte bewirkt.

Die Mischvorrichtung eignet sich zum Mischen von insbesondere empfindlichem Mischgut aller Art, d.h. sowohl zum Mischen von gegebenenfalls feststoffhaltigen flüssigen Chemikalien oder Naturstoffen sowie insbesondere als Reaktor für beliebige chemische Reaktionen, bei denen es auf eine kurze Verweilzeit des Mischgutes und eine gute Selbstreinigung des Mischers ankommt. Besonders geeignet ist der Mischer als Reaktor für Reaktionen unter Freisetzung flüchtiger Stoffe z.B. für Polykondensationsreaktionen sowie für Trocknungs- und Ausdampfprozesse. Der Mischer kann auch beliebig mit im Prinzip bekannten Misch-, Förder- und Knetvorrichtungen gekoppelt sein, z.B. mit Schneckenförderern.

Besonders geeignet ist die erfindungsgemäße Mischvorrichtung zum Ausdampfen oder Entgasen flüchtiger Stoffe aus viskosen Flüssigkeiten mit einer Viskosität von mehr als 10 Pas. Dabei wird eine durchschnittliche Verweilzeit von unter 15 Minuten in der Mischvorrichtung erreicht.

Um eine größere Heiz- bzw. Kühlfläche zu erhalten, können außer dem Gehäuse auch die Wellen oder auch gegebenenfalls zusätzlich die Paddeln und Schaufeln der Rotoren beheizt oder gekühlt werden. Dies ist z.B. möglich durch den Einbau eines Systems innerer Wärmeträger-Kanäle, die die Wellen und gegebenenfalls die Paddeln und Schaufeln des Mischers durchziehen und von einem Wärmeträgermedium durchströmt werden.

Die Erfindung wird nachstehend anhand der Figuren beispielhaft näher erläutert, ohne daß dadurch die Erfindung im Einzelnen eingeschränkt wird.

Es zeigen:

Figur 1a     die vereinfachte schematische Übersichtsdarstellung einer Ausführung der erfindungsgemäßen Vorrichtung mit zwei Rotoren.

Figur 1b     eine Seitenansicht der Vorrichtung nach Fig. 1a.

Figur 2     eine perspektivische Darstellung der Rotoren einer erfindungsgemäßen Vorrichtung. Der Übersichtlichkeit halber wurde auf die Darstellung des Gehäuses verzichtet.

Figur 3     den Radialschnitt durch die Vorrichtung nach Figur 2 entsprechend einem Schnitt A-A in Figur 1a.

Figur 4     eine Darstellung der kinematischen Selbstreinigung der Vorrichtung nach Figur 2 entsprechend einem Schnitt A-A in Figur 1a. Ein Rotor wurde festgehalten, die Relativbewegung des anderen Rotors zu diesem Rotor wurde für verschiedene Winkel der Umdrehung überlagert gezeichnet.

Figur 5     die perspektivische Darstellung der gleichen Vorrichtung wie in Figur 2. Zur Erläuterung der axialen Förderung ist eine Ansicht in axialer Richtung gewählt worden.

Figur 6a     eine vereinfachte Übersichtsdarstellung einer Variante der erfindungsgemäßen Vorrichtung, bei der Extruderabschnitte zur Abtrennung von Ausdampf- bzw. Entgasungsschritten auf verschiedenem Druckniveaus und zum Austrag dienen.

Figur 6b     die Seitenansicht der Vorrichtung nach Fig. 6a.

## Beispiele

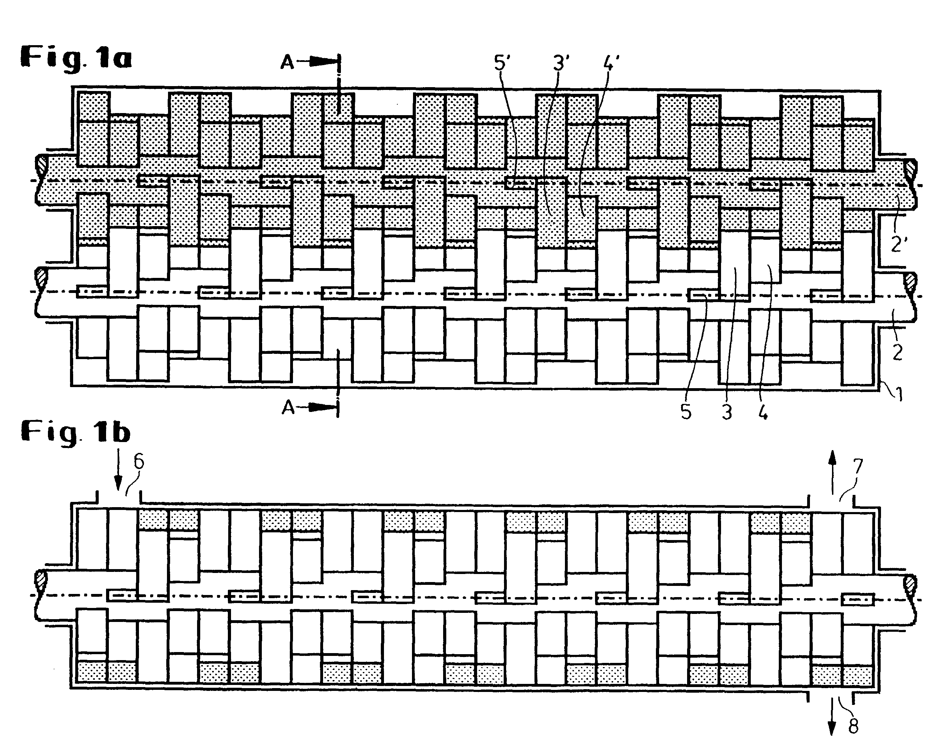

Die Figuren 1a und 1b zeigen den prinzipiellen Aufbau eines erfindungsgemäßen Mischers, bestehend aus einem gegebenenfalls beheizbaren Gehäuse 1 mit Produkteintritt 6 auf der einen und Produktaustritt 8 auf der gegenüberliegenden Seite des Mischers und zwei gegensinnig rotierenden Wellen 2 und 2', an denen Paddel 3, 3' und Schaufeln 4, 4' und 5, 5' angebracht sind. Der Brüden aus dem nicht gezeichneten Mischgut kann über den Stutzen 7 abgezogen werden.

## Beispiel 1

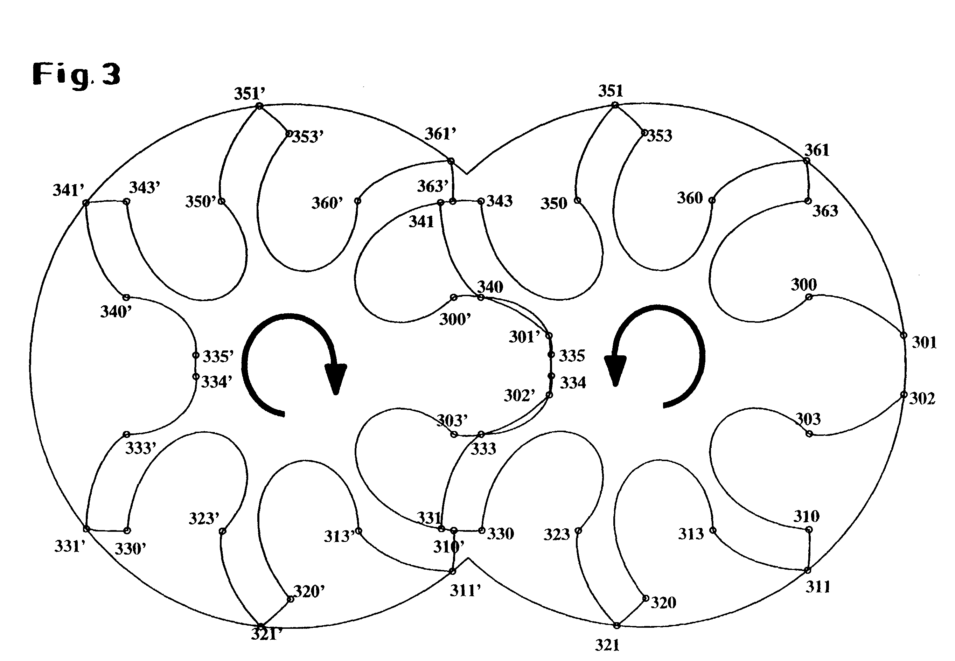

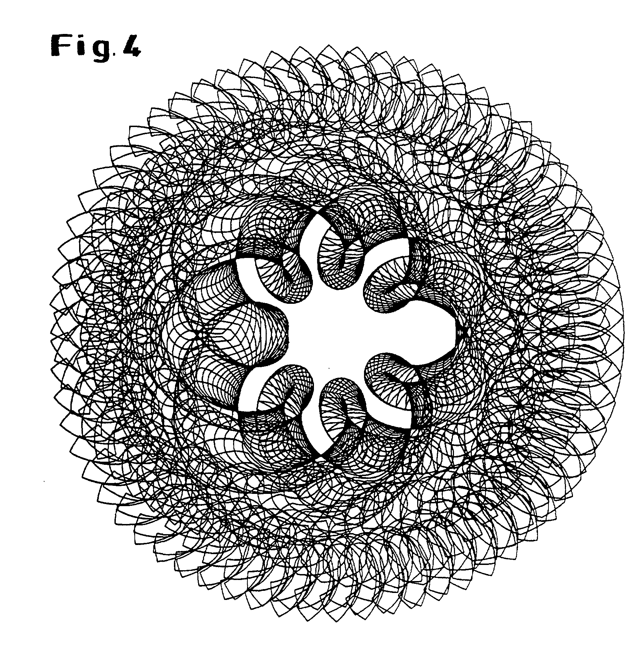

Für das Verständnis der Kinematik sind Radialschnitte des erfindungsgemäßen Mischers entscheidend. Entsprechend sind in den Figuren 3 und 4 Radialschnitte entsprechend dem Schnitt A-A aus Fig. 1 dargestellt.

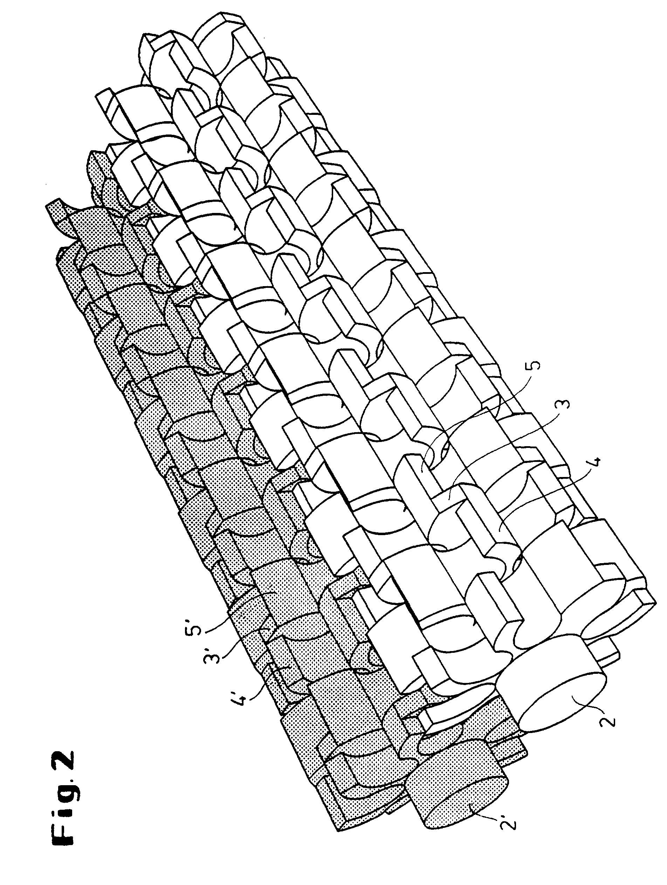

Figur 2 zeigt eine perspektivische Darstellung der Wellen 2, 2', Schaufeln 4, 4', 5, 5' und Paddel 3, 3' eines erfindungsgemäßen Mischers. Das Gehäuse 1 wurde der Übersichtlichkeit halber nicht dargestellt. In Radialschnitten sind alle Schnittkanten entweder Epizykloiden, nämlich dann, wenn die Reinigung der geschnittenen Kante durch eine andere Kante erfolgt, oder Kreise um den Rotationsmittelpunkt, nämlich dann, wenn die Reinigung durch eine Fläche erfolgt.

Die Wellen 2, 2' rotieren gegensinnig mit betragsmäßig gleicher Winkelgeschwindigkeit.

Die Schaufeln 4, 4', 5, 5' sind sowohl mit den Wellen 2, 2' als auch mit den Paddeln 3, 3' verbunden. Nur an den Enden der Rotoren sind Schaufeln vorhanden, die nur mit der Welle verbunden sind.

Auf der stromaufwärts befindlichen Stirnseite der Paddel 3, 3' befindet sich jeweils eine nach außen fördernde Schaufel 5, 5'. Auf der stromabwärts gewandten Stirnseite der Paddel 3, 3' befindet sich jeweils eine nach innen fördernde Schaufel 4, 4'.

Nur an den Enden der Rotoren sind Paddel vorhanden, die nur auf einer Seite eine Schaufel besitzen. Das Gehäuse 1 wird durch die Schaufeln 4, 4', 5, 5' und Paddel 3, 3' vollständig kinematisch gereinigt.

Fig. 3 zeigt einen Radialschnitt gemäß Linie A-A in Fig. 1 durch den Reaktor/Mischer nach Fig. 2. Anhand dieser Zeichnung soll die gegenseitige Reinigung erläutert werden:

| | |
|---|---|
| Fläche 301-302 wird gereinigt durch | Fläche 334'-335', |
| Fläche 302-303 wird gereinigt durch | Kante 333', |
| Fläche 303-310 wird gereinigt durch | Kante 331', |
| Fläche 310-311 wird gereinigt durch | Kante 330', |
| Fläche 311-313 wird gereinigt durch | Kante 323', |
| Fläche 313-310 wird gereinigt durch | Kante 321', |
| Fläche 320-321 wird gereinigt durch | Kante 320', |
| Fläche 321-323 wird gereinigt durch | Kante 313', |
| Fläche 323-320 wird gereinigt durch | Kante 311', |
| Fläche 330-331 wird gereinigt durch | Kante 310', |
| Fläche 331-333 wird gereinigt durch | Kante 303', |
| Fläche 333-334 wird gereinigt durch | Kante 302', |
| Fläche 334-335 wird gereinigt durch | Fläche 301'-302', |
| Fläche 335-340 wird gereinigt durch | Kante 301', |
| Fläche 340-341 wird gereinigt durch | Kante 300', |
| Fläche 341-343 wird gereinigt durch | Kante 363', |
| Fläche 343-350 wird gereinigt durch | Kante 361', |
| Fläche 350-351 wird gereinigt durch | Kante 360', |
| Fläche 351-353 wird gereinigt durch | Kante 353', |
| Fläche 353-360 wird gereinigt durch | Kante 351', |
| Fläche 360-361 wird gereinigt durch | Kante 350', |
| Fläche 361-363 wird gereinigt durch | Kante 343', |
| Fläche 363-300 wird gereinigt durch | Kante 341', |
| Fläche 300-301 wird gereinigt durch | Kante 340'. |

Figur 4 zeigt den gleichen Radialschnitt wie Figur 3. Jedoch wurde ein Welle festgehalten und verschiedene Positionen der anderen Welle mit den darauf befindlichen Schaufeln und Paddeln während einer Umdrehung überlagert gezeichnet. Es wird offensichtlich, daß eine vollständige Reinigung der Einbauten erfolgt.

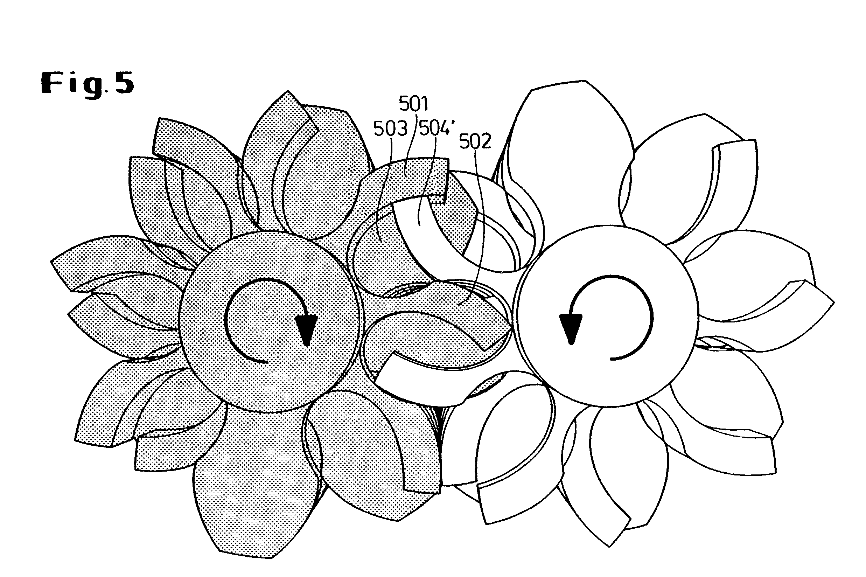

Figur 5 zeigt dieselben Rotoren wie Figur 3 jedoch aus einer anderen Perspektive. Es wird deutlich, daß die Schaufeln 501 und 502 zusammen mit dem Paddel 503 eine Kammer bilden. Wenn während der gegensinnigen Rotation der Rotoren die Schaufel 504' des anderen Rotors in die Kammer hineinfährt, kann das Produkt nur in axialer Richtung ausweichen. Es entsteht hierbei eine Förderwirkung auf den Betrachter zu.

**Beispiel 2**

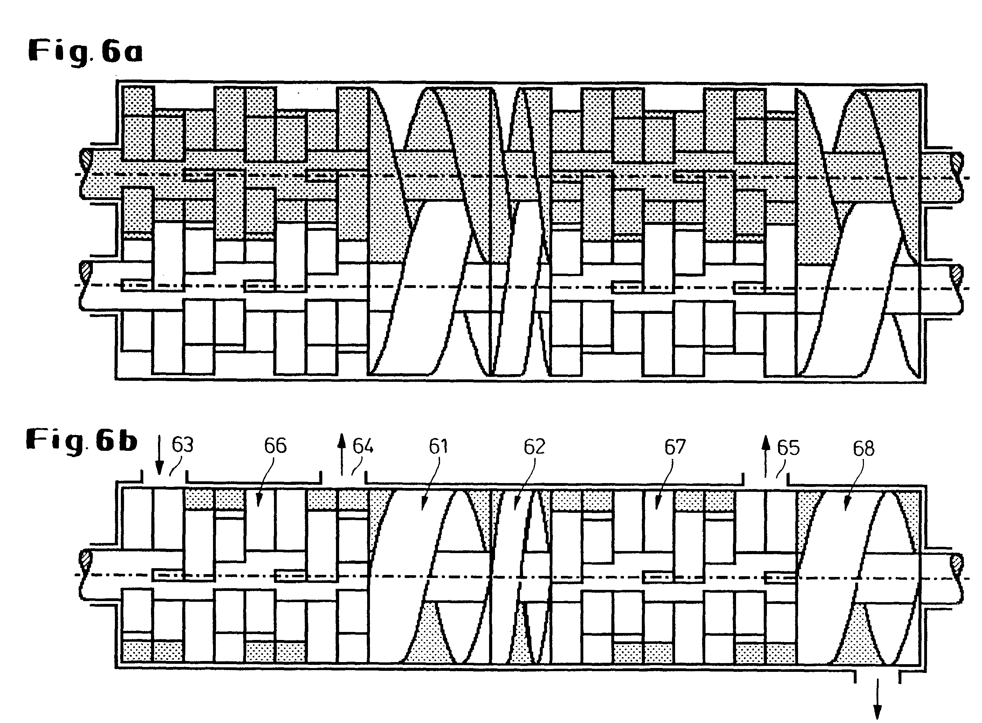

In Figur 6 wird ein Ausdampf- bzw. Entgasungsapparat mit mehreren Druckstufen gezeigt. An den Einlaß 63 schließt sich eine Ausdampfzone 66 mit Mischelementen der in Fig. 2 gezeigten Geometrie an, die ihren Brüden über den Brüdenstutzen 64 abgibt. Die zweite Ausdampfzone 67, mit den gleichen Mischelementen, gibt ihren Brüden über den Brüdenstutzen 65 ab. Die zweite Ausdampfzone 67 wird bei einem geringeren Druck betrieben.

Die Ausdampfzonen 66; 67 sind voneinander getrennt durch Extruderschneckenabschnitte 61 mit einer hohen Steigung und Extruderabschnitte 62 mit einer geringeren Steigung. Durch die Elemente 62 wird ein Rückstau des Mischgutes erzeugt, der dazu führt, daß in den Extruderabschnitten Produkt durch die Spalte zwischen den Schnekkenkämmen der Schneckenelemente 61 und dem Gehäuse zurückfließt. Hierdurch wird eine sichere Gasabdichtung erzeugt, die verhindert, daß Brüden aus der ersten Ausdampfzone 66 in die zweite Ausdampfzone 67 gelangt. Insbesondere wenn die zweite Ausdampfzone im Vakuum betrieben wird, ist dies erforderlich um ein Zusammenbrechen des Vakuums zu verhindern.

Ein letzter Extruderabschnitt 68 erzeugt den nötigen Druck für den Austrag des Produktes, der zum Austrag durch die Düsenplatte einer Granulationseinrichtung oder für eine Filtration erforderlich ist.

### Beispiel 3

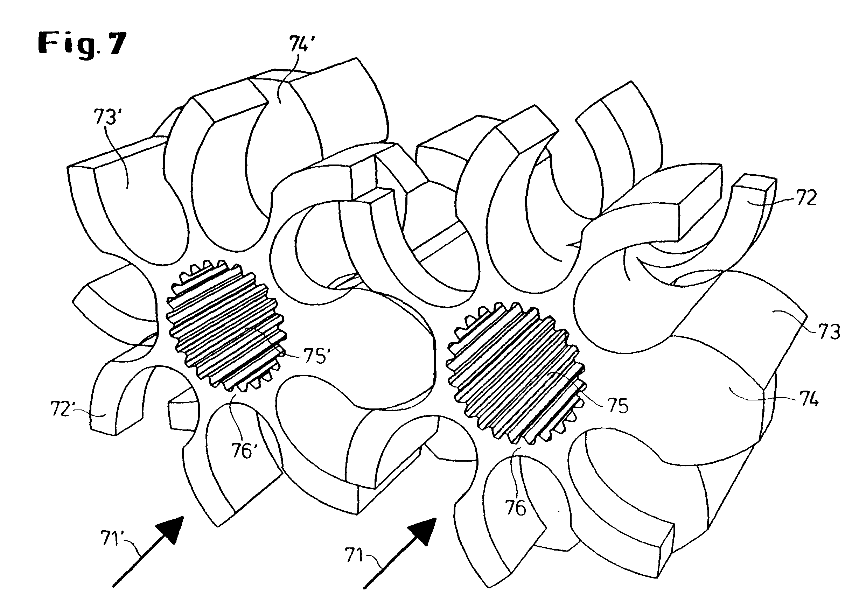

Figur 7 zeigt zwei miteinander im Eingriff befindliche Wellenhülsen (76 und 76'). Diese weisen Öffnungen (75, 75') auf, die zur Aufnahme der Kernwellen dienen. Die Öffnungen sind als Zahnnaben nach DIN 5480 zur Aufnahme des zu übertragenden Drehmomentes ausgestaltet.

Die Wellenhülsen bilden jeweils eine zusammenhängende Einheit (71, 71') mit Paddeln (74, 74'), Schaufeln (73, 73') und Schaufelabschnitten (72, 72').

### Patentansprüche

1. Mischvorrichtung zur Behandlung von viskosem Mischgut, bestehend aus einem Gehäuse (1) mit einem Produkteinlaß (6) und einem Produktauslaß (8), gegebenenfalls einem Brüdenstutzen (7), zwei oder mehreren Wellen (2, 2') mit darauf befindlichen, sich in Umfangsrichtung erstreckenden Paddeln (3, 3') und entlang der axialen Richtung sich erstreckenden Schaufeln (4, 4', 5, 5') und einem Antriebsmittel für die gegensinnige Rotation benachbarter Wellen (2, 2'), **dadurch gekennzeichnet,**

   **daß** die Schaufeln (4, 4', 5, 5') jeweils sowohl mit einer der Wellen (2, 2') als auch mit einem Paddel (3, 3') verbunden sind, abgesehen von den Schaufeln, die sich in axialer Richtung gesehen an den Enden der Vorrichtung befinden,

   **daß** sich auf der stromaufwärts befindlichen Seite eines jeden Paddels (3, 3') mindestens eine nach außen fördernde Schaufel (5, 5') und an der stromabwärts befindlichen Seite eines jeden Paddels (3, 3') mindestens eine nach innen fördernde Schaufel (4, 4') befindet, abgesehen von den Paddeln, die sich in axialer Richtung an den Enden der Vorrichtung befinden,

   **daß** die Schaufeln (4, 4', 5, 5') und Paddel (3, 3') die Innenwand des Gehäuses (1) bei der durch das Antriebsmittel hervorgerufenen Rotation der Wellen vollständig überstreichen und damit vollständig kinematisch reinigen,

   **daß** die Schaufeln (4, 4', 5, 5') und Paddel (3, 3') die Wellen (2, 2') bei der durch das Antriebsmittel hervorgerufenen Rotation der Wellen vollständig überstreichen und damit vollständig kinematisch reinigen,

   **daß** die Schaufeln (4, 5) und Paddel (3) einer Welle (2) bei der durch das Antriebsmittel hervorgerufenen Rotation der Wellen (2, 2') durch Schaufeln (4', 5') und Paddel (3') einer direkt benachbarten Welle (2'), durch die Welle (2') selbst oder durch die Gehäuseinnenwand überstrichen und damit vollständig kinematisch gereinigt werden,

   **daß** jeweils zwei in Umfangsrichtung einer Welle (2) aufeinander folgende Schaufeln (501, 502) und mindestens ein Paddel (503), (das mit einer der Schaufeln verbunden ist) eine Kammer bilden, in die sich eine auf einer anderen im Eingriff befindlichen benachbarten Welle (2') befindliche Schaufel (504') bei der Rotation der Wellen (2) und (2') hineinbewegt und dabei das Produkt mehrheitlich in die der Oberfläche des Paddels (503) entgegengesetzte Richtung aus der Kammer verdrängt.

2. Vorrichtung nach Anspruch 1, **dadurch gekennzeichnet,**
   **daß** in einem beliebigen Radialschnitt durch die Vorrichtung die Schnittkanten von Schaufeln (4, 4', 5, 5') und Paddeln (3, 3') jeweils entweder Kreisbogenabschnitte um den jeweiligen Rotationsmittelpunkt oder Epizykloidenabschnitte sind.

3. Vorrichtung einem der Ansprüche 1 oder 2, **dadurch gekennzeichnet,**
   **daß** das Antriebsmittel die Wellen (2, 2') betragsmäßig gleich schnell antreibt.

4. Vorrichtung nach einem der Ansprüche 1 bis 3, **dadurch gekennzeichnet,**
   **daß** das Verhältnis von Gehäuseinnendurchmeser und Achsabstand von 1,45 bis 1,7 beträgt.

5. Vorrichtung nach einem der Ansprüche 1 bis 4, **dadurch gekennzeichnet, daß** in einem beliebigen Radialschnitt durch den Mischer sich auf jeder Welle (2, 2') nur ein Paddel (3, 3') befindet.

6. Vorrichtung nach einem der Ansprüche 1 bis 5, **dadurch gekennzeichnet,**
**daß** die Wellen aus Kernwellen und auf diesen befindlichen Wellenhülsen zusammengesetzt sind, daß ausgewählte Schaufeln in wenigstens zwei in axialer Richtung aufeinander folgende Schaufelabschnitte geteilt sind, und daß die Wellenhülsen mit Paddeln, gegebenenfalls nicht geteilten Schaufeln und Schaufelabschnitten fest verbundene Segmente bilden.

7. Vorrichtung nach einem der Ansprüche 1 bis 6, **dadurch gekennzeichnet,**
**daß** jede Welle (2, 2') zusätzlich Extruderschneckenabschnitte (61, 61') bzw. (62, 62') aufweist.

8. Vorrichtung nach Anspruch 7, **dadurch gekennzeichnet,**
**daß** ein Extruderschneckenabschnitt, der zur Abtrennung verschiedener Verfahrensabschnitte dient, in Strömungsrichtung aus zunächst einem Schneckenteil (61) mit größerer Steigung gefolgt von einem Schneckenteil (62) mit geringerer Steigung besteht.

9. Verfahren zum Ausdampfen oder Entgasen flüchtiger Stoffe aus viskosen Flüssigkeiten unter Verwendung einer Vorrichtung nach einem der Ansprüche 1 bis 8 mit einer Viskosität der Flüssigkeit von mehr als 10 Pas und mit einer durchschnittlichen Verweilzeit des Mischgutes von kleiner 15 Minuten.

## Claims

1. Mixing apparatus for the treatment of viscous mixed substance, comprising a housing (1) with a product inlet (6) and a product outlet (8), if appropriate an exhaust vapour nozzle (7), two or more shafts (2, 2') with, located thereupon, paddles (3, 3') extending in the circumferential direction and blades (4, 4', 5, 5') extending along the axial direction and a drive means for the counter-rotation of neighbouring shafts (2, 2'), **characterized**

   **in that** the blades (4, 4', 5, 5') are respectively connected both to one of the shafts (2, 2') and to a paddle (3, 3'), apart from the blades which, seen in the axial direction, are located at the ends of the apparatus,

   **in that** on the upstream side of each paddle (3, 3') there is at least one outwardly conveying blade (5, 5') and on the downstream side of each paddle (3, 3') there is at least one inwardly conveying blade (4, 4'), apart from the paddles which, in the axial direction, are located at the ends of the apparatus,

   **in that**, with the rotation of the shafts brought about by the drive means, the blades (4, 4', 5, 5') and paddles (3, 3') sweep fully over the inside wall of the housing (1) and consequently fully clean it kinematically,

   **in that**, with the rotation of the shafts brought about by the drive means, the blades (4, 4', 5, 5') and paddles (3, 3') sweep fully over the shafts (2, 2') and consequently fully clean them kinematically,

   **in that**, with the rotation of the shafts (2, 2') brought about by the drive means, the blades (4, 5) and paddles (3) of one shaft (2) are swept over by blades (4', 5') and paddles (3') of a directly neighbouring shaft (2'), by the shaft (2') itself or by the housing inside wall and are consequently fully cleaned kinematically,

   **in that** pairs of blades (501, 502) following each other in the circumferential direction of a shaft (2) and at least one paddle (503), (which is connected to one of the blades) form a chamber into which, with the rotation of the shafts (2) and (2'), a blade (504') located on another, neighbouring shaft (2'), in engagement, moves and thereby forces most of the product out of the chamber in the direction opposed to the surface of the paddle (503).

2. Apparatus according to Claim 1, **characterized**
**in that**, in any desired radial section through the apparatus, the cut edges of blades (4, 4', 5, 5') and paddle (3, 3') are respectively either portions of arcs of a circle about their respective rotation centre point or epicycloid portions.

3. Apparatus according to one of Claims 1 or 2, **characterized**
**in that** the drive means drives shafts (2, 2') equally fast in absolute terms.

4. Apparatus according to one of Claims 1 to 3, **characterized**
**in that** the ratio of housing inside diameter and axial spacing is from 1.45 to 1.7.

**5.** Apparatus according to one of Claims 1 to 4, **characterized in that** there is in any desired radial section through the mixer only one paddle (3, 3') on each shaft (2, 2').

**6.** Apparatus according to one of Claims 1 to 5, **characterized in that** the shafts are made up of core shafts and shaft sleeves located on the latter, in that selected blades are divided into at least two blade portions following one another in the axial direction, and in that the shaft sleeves form segments securely connected to paddles, possibly undivided blades and blade portions.

**7.** Apparatus according to one of Claims 1 to 6, **characterized in that** each shaft (2, 2') additionally has extruder screw portions (61, 61') and (62, 62'), respectively.

**8.** Apparatus according to Claim 7, **characterized in that** an extruder screw portion which serves for separating various process stages comprises, in the direction of flow, firstly a screw part (61) with greater pitch followed by a screw part (62) with lesser pitch.

**9.** Process for the evaporating or degassing of volatile substances from viscous liquids using an apparatus according to one of Claims 1 to 8 with a viscosity of the liquid of more than 10 Pas and with an average dwell time of the mixed substance of less than 15 minutes.

**Revendications**

**1.** Dispositif mélangeur pour traiter une matière à mélanger visqueuse, constitué par un récipient (1) comportant une admission de produit (6) et une sortie de produit (8) et le cas échéant un manchon à vapeur (7), par deux ou plusieurs arbres (2, 2') comportant des ailettes (3, 3') situées sur ceux-ci et s'étendant en direction périphérique et des aubes (4, 4', 5, 5') qui s'étendent suivant la direction axiale, et par un moyen d'entraînement pour la rotation en sens opposés des arbres voisins (2, 2'), **caractérisé en ce que** les aubes (4, 4', 5, 5') sont reliées chacune aussi bien à l'un des arbres (2, 2') qu'à une ailette (3, 3'), exception faite des aubes qui se trouvent aux extrémités du dispositif, vues en direction axiale, **en ce que** sur le côté en amont de chaque ailette (3, 3') se trouve au moins une aube (5, 5') convoyant vers l'extérieur et sur le côté en aval de chaque ailette (3, 3') se trouve au moins une aube (4, 4') convoyant vers l'intérieur, exception faite des ailettes qui se trouvent aux extrémités du dispositif, vues en direction axiale, **en ce que** les aubes (4, 4', 5, 5') et les ailettes (3, 3') balaient entièrement la paroi intérieure du boîtier (1) lors de la rotation des arbres provoquée par le moyen d'entraînement et la nettoient donc complètement par voie cinématique, **en ce que** les aubes (4, 4', 5, 5') et les ailettes (3, 3') balaient entièrement les arbres (2, 2') lors de la rotation des arbres provoquée par le moyen d'entraînement et les nettoient donc complètement par voie cinématique, **en ce que** les aubes (4, 4', 5, 5') et les ailettes (3, 3') d'un arbre (2) sont balayées, lors de la rotation des arbres (2, 2') provoquée par le moyen d'entraînement, par des aubes (4', 5') et des ailettes (3') d'un arbre (2') immédiatement voisin, par cet arbre (2') lui-même ou par la paroi intérieure du boîtier, et sont ainsi complètement nettoyées par voie cinématique, **en ce que** deux aubes respectives (501, 502) qui se suivent en direction périphérique d'un arbre (2) et au moins une ailette (503) (qui est reliée à l'une des aubes) forment une chambre dans laquelle rentre une aube (504') située sur un autre arbre voisin (2') en engagement lors de la rotation des arbres (2) et (2') et refoule dans ce cas le produit hors de la chambre en majeure partie dans la direction opposée à la surface de l'ailette (503).

**2.** Dispositif selon la revendication 1, **caractérisé en ce qu'**en coupe radiale quelconque à travers le dispositif, les arêtes d'intersection des aubes (4, 4', 5, 5') et des ailettes (3, 3') sont chacune soit des tronçons d'arc de cercle autour du centre de rotation respectif soit des tronçons d'épicycloïde.

**3.** Dispositif selon l'une ou l'autre des revendications 1 et 2, **caractérisé en ce que** le moyen d'entraînement entraîne les arbres (2, 2') à la même vitesse.

**4.** Dispositif selon l'une quelconque des revendications 1 à 3, **caractérisé en ce que** le rapport entre le diamètre intérieur du boîtier et la distance axiale est compris entre 1,45 et 1,7.

**5.** Dispositif selon l'une quelconque des revendications 1 à 4, **caractérisé en ce qu'**en coupe radiale quelconque à travers le mélangeur une seule ailette (3, 3') se trouve sur chaque arbre (2, 2').

**6.** Dispositif selon l'une quelconque des revendications 1 à 5, **caractérisé en ce que** les arbres sont composés par des arbres formant noyau et par des douilles d'arbre situées sur ceux-ci, **en ce que** des aubes sélectionnées sont subdivisées en au moins deux tronçons d'aube qui se suivent en direction axiale, et **en ce que**, conjointement avec des ailettes, le cas échéant avec des aubes non divisées et des tronçons d'aube, les douilles d'arbre forment des segments solidaires.

7. Dispositif selon l'une quelconque des revendications 1 à 6, **caractérisé en ce que** chaque arbre (2, 2') comprend en supplément des tronçons de vis d'extrudeuse (61, 61') ou (62, 62').

8. Dispositif selon la revendication 7, **caractérisé en ce qu'**un tronçon de vis d'extrudeuse qui sert à séparer des étapes de procédé différentes est constitué, en direction d'écoulement, tout d'abord par une partie de vis (61) à pas élevé suivie par une partie de vis (62) à pas faible.

9. Procédé pour faire évaporer ou dégazer des substances volatiles hors de liquides visqueux en appliquant un dispositif selon l'une quelconque des revendications 1 à 8, la viscosité du liquide étant supérieure à 10 Pa-s et la durée de séjour moyenne de la matière à mélanger étant inférieure à 15 minutes.

**Fig. 1a**

**Fig. 1b**

EP 0 930 141 B1

# Fig.2

Fig. 3

Fig.4

Fig.5

# Fig. 6a

# Fig. 6b

Fig. 7